# EUROPEAN PATENT APPLICATION

(11) **EP 0 973 222 A1**
(43) Date of publication of application: **19.01.2000**
(21) Application number: 98901512.8
(22) Date of filing: 05.02.1998
(51) Int. Cl.: H01M 10/40

(54) **METHOD FOR MANUFACTURING LITHIUM ION BATTERY**

(71) Applicant: MITSUBISHI DENKI KABUSHIKI KAISHA, Tokyo 100-8310 (JP)
(72) Inventor: YOSHIDA, Yasuhiro, Mitsubishi Denki K. K., Tokyo 100-8310 (JP); MURAI, Michio, Mitsubishi Denki K. K., Tokyo 100-8310 (JP); INUZUKA, Takayuki, Mitsubishi Denki K. K., Tokyo 100-8310 (JP); AIHARA, Shigeru, Mitsubishi Denki K. K., Tokyo 100-8310 100-8310 (JP); TAKEMURA, Daigo, Mitsubishi Denki K. K., Tokyo 100-8310 (JP); SHIOTA, Hisashi, Mitsubishi Denki K. K., Tokyo 100-8310 (JP); ARAGANE, Jun, Mitsubishi Denki K. K., Tokyo 100-8310 (JP); URUSHIBATA, Hiroaki, Mitsubishi Denki K. K., Tokyo 100-8310 (JP); HAMANO, Kouji, Mitsubishi Denki K. K., Tokyo 100-8310 (JP)
(74) Representative: Sajda, Wolf E., Dipl.-Phys.
(86) International application number: JP9800470
(87) International publication number: WO9940644

(57) **Abstract**

It is an object of the invention to provide a process for producing a lithium ion battery comprising adhering a positive and a negative electrode to an ion conducting layer (separator) with an adhesive resin thereby to obtain sufficient joint strength between the electrodes and the separator while securing ion conductivity among the positive and negative electrodes and the separator. The steps of heating an adhesive liquid (4) which is a mixture of a solvent and a resin and in which the resin is not completely dissolved at or below room temperature and applying the heated adhesive liquid to the adhesive surface of the separator (3) or of the electrode (1 or 2), superposing the separator and the electrodes with their adhesive surfaces facing each other, and drying the applied adhesive liquid are carried out in order. The solubility of the resin is increased when the adhesive liquid is to be applied to make uniform application feasible. After application, since the adhesive liquid is reduced in flowability so that it is prevented from running or penetrating, adhesion can be achieved satisfactorily.

## Description

### Technical Field

This invention relates to a lithium ion secondary battery comprising a positive electrode and a negative electrode facing each other via a separator holding an electrolytic solution. More particularly, it relates to a method of adhering a positive electrode and a negative electrode to a separator while securing ion conductivity.

### Background of the Invention

There has been an extraordinary demand for reduction in size and weight of portable electronic equipment, and the realization relies heavily on improvement of battery performance. To meet the demand, development and improvement of batteries from various aspects have been proceeding. Characteristics required of batteries include a high voltage, a high energy density, safety, and freedom of shape design. Of conventional batteries, lithium ion batteries are the most promising secondary batteries for realizing a high voltage and a high energy density and are still under study for further improvements.

A lithium ion battery mainly comprises a positive plate, a negative plate, and an ion conducting layer interposed therebetween. The lithium ion batteries that have been put to practical use employ a positive plate prepared by applying to a current collector a powdered active material, such as a lithium-cobalt oxide, a negative plate similarly prepared by applying to a current collector a powdered carbonaceous active material, and an interposed separator as an ion conducting layer which is made of a porous film of polypropylene, etc. filled with a nonaqueous electrolytic solution.

In a currently available lithium ion battery, an electrical connection among the positive electrode, the ion conducting layer, and the negative electrode is maintained by imposing pressure by use of a housing made of metal, etc. However, such a housing increases the weight of the lithium ion battery, making it difficult to achieve size and weight reduction. Besides, its rigidity is a bar to freedom of battery shape.

In order to achieve size and weight reduction and freedom of design of a lithium ion battery, it is necessary to join a positive and a negative electrode to an ion conducting layer and to retain the joined state without applying outer pressure. Means disclosed in this connection include a structure in which electrodes are joined to a separator with a liquid adhesive mixture and a structure in which an active material is bound with an electron conducting polymer to form an electrode, and the electrodes are joined via a polyelectrolyte (see U.S. Patent 5,437,692).

The method in which electrodes are joined with a polyelectrolyte has the following problems. The electrolyte layer should have a sufficient thickness for security, i.e., enough to prevent a short-circuit between electrodes, failing to provide a sufficiently thin battery. Where a solid electrolyte is used, it is difficult to join an electrolyte layer and an electrode active material, making it difficult to improve battery characteristics such as charge and discharge efficiency. Further, the production process is complicated, resulting in an increase of cost.

According to the method comprising joining electrodes and a separator with a liquid adhesive mixture, safety can be easily secured because of the separator existing between electrodes. However, an increased amount of the adhesive mixture enough to obtain sufficient adhesive strength will impair the battery characteristics on account of a failure to secure sufficient ion conductivity. It is therefore difficult to satisfy both the requirements of adhesive strength and battery characteristics.

The invention has been completed in order to solve the above-described problems. An object of the present invention is to provide a battery which exhibits both safety and strength as well as satisfactory charge and discharge characteristics and the like. The invention provides a process for producing a lithium ion battery comprising bringing a positive and a negative electrode into intimate contact with an ion conducting layer (separator) with an adhesive resin thereby to give sufficient joint strength between each electrode and the separator while retaining ion conductivity through the positive and negative electrodes and the separator.

### Disclosure of the Invention

A first process for producing a lithium ion battery according to the invention is a process for producing a lithium ion battery having a separator and electrodes each adhered to the separator, the separator holding an electrolytic solution containing lithium ions, which comprises the steps of coating the adhesive surface of the separator or of the electrode with a heated adhesive liquid which is a mixture of a solvent and a resin that is not completely dissolved in the solvent at or below room temperature, superposing the separator and the electrodes with their adhesive surfaces facing each other, and drying the applied adhesive liquid.

The adhesive liquid in which the resin is not dissolved completely at or below room temperature is heated when it is to be applied so as to increase the amount of the resin dissolved in the solvent. After application, as temperature comes down, the solubility of the resin decreases to make the applied adhesive liquid into gel. The applied adhesive liquid is thus prevented from running or penetrating while the separator and the electrodes are superposed and adhered, whereby adhesion operation can be accomplished in a satisfactory manner.

A second process for producing a lithium ion battery according to the invention is the above-described first process, wherein the resin is a homo- or copolymer of vinylidene fluoride, vinyl alcohol, methacrylic acid or acrylic acid, agar or gelatin. A homo- or copolymer of vinylidene fluoride, vinyl alcohol, methacrylic acid or acrylic acid, agar or gelatin is preferred as a resin because they are sparingly soluble in an electrolytic solution and therefore stable.

In a third process for producing a lithium ion battery according to the invention, the solvent is the one used as the electrolytic solution. Where the solvent used in the electrolytic solution is used as a solvent of the adhesive liquid, no problem occurs even if the solvent is not completely dried in the step of drying the adhesive liquid, which affords a great saving of drying time.

A fourth process for producing a lithium ion battery according to the invention is the above-described third process, wherein the resin is a homo- or copolymer of vinylidene fluoride. A homo- or copolymer of vinylidene fluoride is preferred as the resin because it is sparingly soluble and stable in an electrolytic solution.

In a fifth process for producing a lithium ion battery according to the invention, the solvent is a mixture of a solvent that dissolves the resin and a solvent that does not dissolve the resin. The solubility of the resin can be easily controlled over a wide range by mixing a solvent that dissolves the resin and a solvent that does not dissolve the resin.

A sixth process for producing a lithium ion battery according to the invention is the above-described fifth process, wherein the resin is a homo- or copolymer of vinylidene fluoride, vinyl alcohol, methacrylic acid or acrylic acid, agar or gelatin. A homo- or copolymer of vinylidene fluoride, vinyl alcohol, methacrylic acid or acrylic acid, agar or gelatin is preferred as the resin because they are sparingly soluble in an electrolytic solution and therefore stable.

A seventh process for producing a lithium ion battery according to the invention is the above-described fifth process, wherein the solvent that does not dissolve the resin is an alcohol or water. Alcohols exhibit high safety and have a low boiling point, which is advantageous for the step of drying. Water is preferred for its inexpensiveness as well as high safety.

An eighth process for producing a lithium ion battery according to the invention is the above-described seventh process, wherein the resin is a homo- or copolymer of vinylidene fluoride. A homo- or copolymer of vinylidene fluoride is preferred as the resin because it is sparingly soluble in an electrolytic solution and therefore stable.

### Brief Description of the Drawings

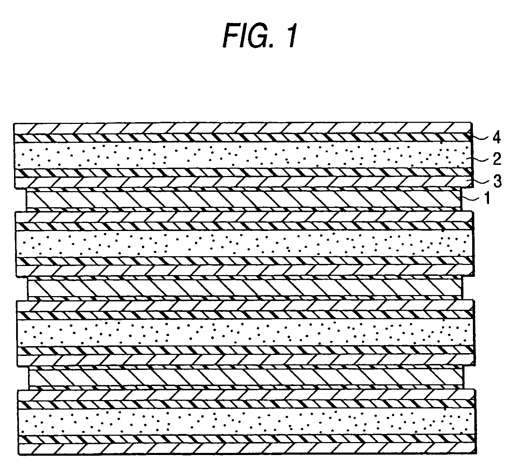

Figs. 1, 2, and 3 are each a schematic cross section illustrating the main part of a lithium ion battery produced by one of the modes for carrying out the invention.

### Best Mode for Carrying out the Invention

The modes for carrying out the invention will be explained by referring to the accompanying drawings.

Figs. 1, 2, and 3 are each a schematic cross section illustrating the main part of a lithium ion battery produced by a mode for carrying out the invention, wherein numerals 1, 2, 3, and 4 indicate a positive electrode, a negative electrode, a separator, and an adhesive layer, respectively.

The invention relates to a process for producing a lithium ion battery having a structure comprising a separator 3 and electrodes 1 and 2 each adhered to the separator 3, the separator 3 holding an electrolytic solution containing lithium ions. An adhesive liquid which is a mixture of a solvent and a resin that is not completely dissolved in the solvent at or below room temperature is stirred while heating. On heating, the resin increases the solubility in the solvent. It follows that the amount of the resin dissolved becomes higher than at room temperature to increase the viscosity of the liquid. The adhesive liquid in this state is uniformly applied to the separator or the electrode. On being applied, the coating liquid is cooled to about room temperature, and the solubility of the resin decreases whereby the dissolved resin begins to precipitate. Then the coating liquid becomes gel through physical entanglement among the resin molecular chains, hydrogen bonding, and the like. Subsequently, the adhesive surface of the separator and the adhesive surface of the electrode are stuck to each other, followed by drying to complete joining.

Any resin can be used here as far as it is insoluble in the electrolytic solution used in the lithium ion battery at room temperature. While not limiting, useful resins include homo- or copolymers of vinylidene fluoride, vinyl alcohol, methacrylic acid or acrylic acid, agar, and gelatin. A homo- or copolymer of vinylidene fluoride is particularly preferred, for it hardly reacts with an electrolytic solution and is therefore stable. While not limiting, copolymers of vinylidene fluoride include those obtained by copolymerizing vinylidene fluoride with fluorine-containing monomers, such as hexafluoropropylene and tetrafluoroethylene.

The solvent is required to be capable of dissolving at least part of the above-mentioned resin. Examples of useful solvents are cyclohexanone, N-methylpyrrolidone (hereinafter abbreviated as NMP), tetrahydrofuran, dimethylformamide (hereinafter abbreviated as DMF), dimethylacetamide, dimethyl sulfoxide, water, alcohols, and mixtures thereof.

Where the solvent is the one used as the electrolytic solution, the following advantages are obtained. In using a general solvent, the adhesive liquid applied should be dried until all the solvent is removed. In using the electrolytic solution as a solvent, no problem occurs even if the solvent remains after the drying, which leads to a great saving of drying time. This embodiment is particularly effective in case where a drying operation meets difficulty, for example, in manufacturing batteries using electrodes and separators of large area. The electrolytic solution as referred to here includes ether solvents, such as dimethoxyethane and diethyl ether, ester solvents, such as ethylene carbonate and propylene carbonate, and mixtures thereof. In the step of coating, an electrolyte may be either present or absent in the solvent. Useful electrolytes include LiPF₆, LiClO₄, and LiBF₄.

The resin and the solvent are mixed in such a ratio that the resin is not completely dissolved in the solvent at or below room temperature but increases in solubility when heated. The resin does not need to be dissolved completely when heated. That is, the adhesive liquid to be applied can be of a system in which the solubility has been improved by heating so that a part of the resin that does not dissolve at room temperature can be dissolved.

The heating temperature is preferably in a range of from a temperature 10°C higher than room temperature up to 100°C. Unless the temperature difference from room temperature is 10°C or greater, the change in solubility is too small to obtain sufficient effects of the invention. If the liquid is heated to 100°C or higher, the workability is extremely deteriorated because of evaporation of the solvent or other reasons.

The solubility of the resin can be controlled with ease over a wide range by using, as a solvent of the adhesive liquid, a mixture of a solvent that dissolves the resin and a solvent that does not dissolve the resin. In this embodiment, the solvent that dissolves the resin and the solvent that does not dissolve the resin which are used in combination should be mutually soluble. Except this point, there is no particular limitation on the solvents to be combined. It is desirable for the solvents to have a boiling point of 50°C to 250°C, particularly 60 to 210°C. Solvents having too low a boiling point make the operation following application difficult. Solvents having too high a boiling point need a prolonged drying time, which is disadvantageous in the practice.

The solvent that does not dissolve the resin includes hydrocarbons, such as hexane, pentane, and cyclohexane; water; and alcohols, such as methanol and ethanol. Use of ethanol is of particular advantage for the drying step because of its high safety and its low boiling point. Further, water is preferred for its high safety and inexpensiveness.

Useful coating methods include spray coating, bar coating, roller coating, and screen printing. Any coating technique that achieves uniform application can be used.

After application, the temperature of the applied liquid decreases so that the dissolved resin precipitates, and the solution reduces in flowability as compared with the solution while being applied. In this condition, the separator and the electrode are joined together, whereby an adhesion operation can be achieved satisfactorily without suffering from loss of the adhesive liquid from the adhesive interface due to running or penetration.

The electrodes which can be used include those composed of an active material applied onto a current collector. The active material for a positive electrode includes an oxide or a chalcogenide of a transition metal, such as cobalt, manganese or nickel; complex compounds thereof; and these compounds containing various dopant elements. The active material for a negative electrode preferably includes carbonaceous materials. Any carbonaceous material can be employed in the invention irrespective of its chemical characteristics. These active materials are used in a particulate form. Particles of 0.3 to 20 µm in size can be used. A preferred particle size is 1 to 5 µm. If the particle size is too small, the surface area of the active material layer to be coated with the adhesive becomes too large. It follows that lithium ion intercalation and disintercalation in charging and discharging are not carried out efficiently, resulting in reduction of battery characteristics. Too large active material particles are not easy to make into thin film and have a reduced packing density. Besides, the resulting electrode plate has large unevenness, which prevents satisfactory adhesion to a separator.

Any metal stable within a battery can be used as a current collector. Aluminum is preferred for a positive electrode, and copper is preferred for a negative electrode. The current collector can be foil, net, expanded metal, etc. Those presenting a large surface area, such as net and expanded metal, are preferred from the standpoint of adhesive strength and ease of impregnating with an electrolytic solution after adhesion.

Any insulating separator that has sufficient strength, such as porous film, net, and nonwoven fabric, can be used. Some of separators made of fluorocarbon resins require surface treatment with plasma, etc. to secure adhesive strength. While not limiting, a porous film made of a thermoplastic resin, such as polyethylene or polypropylene, is preferably used for adhesiveness and safety.

The battery structure is not limited as far as the positive and the negative electrodes face each other with a separator therebetween. Applicable structures include a laminated structure composed of tabular electrode bodies, a roll type structure, a folded type structure, and a combination thereof.

The lithium ion battery according to the invention will now be illustrated in greater detail with reference to Examples, but the invention is by no means limited thereto.

### EXAMPLE 1

### Preparation of positive electrode:

A positive electrode active material paste prepared from 87% by weight of LiCoO₂, 8% by weight of graphite powder (KS-6, produced by Lonza Ltd.), and 5% by weight of polyvinylidene fluoride (KF1100, produced by Kureha Chemical Ind. Co., Ltd.) as a binder resin was applied to 20 µm thick aluminum foil, a current collector, by a doctor blade coating method to a coating thickness of about 100 µm to form a positive electrode.

### Preparation of negative electrode:

A negative electrode active material paste prepared from 95% by weight of Mesophase Microbeads Carbon (produced by Osaka Gas Co., Ltd.) and, as a binder, 5% by weight of polyvinylidene fluoride (KF1100, produced by Kureha Chemical Ind. Co., Ltd.) was applied to 12 µm thick copper foil, a current collector, by a doctor blade coating method to a coating thickness of about 100 µm to form a negative electrode.

### Preparation of battery:

Polyvinylidene fluoride (Solef 21508, produced by Nippon Solvey K.K.) as a resin and cyclohexanone as a solvent were mixed at a ratio of 20:80 by weight. The resin did not dissolve in the solvent completely at room temperature. The resulting adhesive liquid was heated to 80°C, whereupon polyvinylidene fluoride dissolved completely. The heated adhesive liquid was uniformly applied to a side of a separator at room temperature (Cell Guard #2400, produced by Hoechst Celanese). On being applied, the adhesive liquid was reduced in temperature and gelled to lose flowability. In this state the positive electrode was stuck to the coated side at room temperature. The other side of the separator was similarly coated with the heated adhesive liquid, and the negative electrode was stuck thereto. The resulting electrode body was dried in vacuo to complete adhesion. After thorough drying, an electrolytic solution prepared by dissolving lithium hexafluorophosphate (produced by Tokyo Kasei Kogyo K.K.) in a 1:1 (by mole) mixed solvent of ethylene carbonate (produced by Kanto Kagaku K.K.) and 1,2-dimethoxyethane (produced by Wako Pure Chemical Ind., Ltd.) in a concentration of 1.0 mol/dm³ was poured into the electrode body. The impregnated electrode body was heat-sealed into an aluminum laminate film pack to complete a battery.

The resulting battery had a weight energy density of 120 Wh/kg. The charge capacity even after 200 charge and discharge cycles at a current of C/2 was as high as 75% of the initial value.

### EXAMPLE 2

Polyvinylidene fluoride (KF1100, produced by Kureha Chemical Ind. Co., Ltd.) as a resin, and ethylene carbonate (produced by Kanto Kagaku K.K.) and diethyl carbonate (produced by Wako Pure Chemical Ind., Ltd.) as solvents, which were components of the electrolytic solution of the battery prepared here, were mixed at a weight ratio of 10:45:45. The mixture was white turbid at room temperature. The resulting adhesive liquid was heated to 80°C, whereupon polyvinylidene fluoride dissolved to increase the viscosity of the mixture, but insoluble matter still remained.

The adhesive liquid heated to 80°C was applied to the same separator as used in Example 1, and the same positive and negative electrodes as prepared in Example 1 were joined thereto. A battery was prepared in the same manner as in Example 1 using the resulting electrode body. The battery thus prepared had a weight energy density of 114 Wh/kg. The charge capacity even after 250 charge and discharge cycles at a current of C/2 was as high as 67% of the initial value.

### EXAMPLE 3

Polyvinylidene fluoride (KF1100, produced by Kureha Chemical Ind. Co., Ltd.) as a resin and, as solvents, NMP and tetrahydrofuran were mixed at a weight ratio of 7:50:43. The mixture was white turbid at room temperature. The resulting adhesive liquid was heated to 70°C, whereupon polyvinylidene fluoride dissolved completely to provide a clear solution.

The adhesive liquid heated to 70°C was applied to the same separator as used in Example 1, and the same positive and negative electrodes as prepared in Example 1 were joined thereto. A battery was prepared in the same manner as in Example 1 using the resulting electrode body. The battery thus prepared had a weight energy density of 105 Wh/kg. The charge capacity even after 100 charge and discharge cycles at a current of C/2 was as high as 70% of the initial value.

### EXAMPLE 4

Polyvinylidene fluoride (KF1100, produced by Kureha Chemical Ind. Co., Ltd.) as a resin and, as solvents, DMF and cyclohexanone were mixed at a weight ratio of 15:50:35. The mixture was white turbid at room temperature. The resulting adhesive liquid was heated to 80°C, whereupon polyvinylidene fluoride dissolved to increase the viscosity of the liquid, but insoluble matter still remained.

The adhesive liquid heated to 80°C was applied to the same separator as used in Example 1, and the same positive and negative electrodes as prepared in Example 1 were joined thereto. A battery was prepared in the same manner as in Example 1 using the resulting electrode body. The battery thus prepared had a weight energy density of 100 Wh/kg. The charge capacity even after 200 charge and discharge cycles at a current of C/2 was as high as 65% of the initial value.

### EXAMPLE 5

Polyvinylidene fluoride (KF1100, produced by Kureha Chemical Ind. Co., Ltd.) as a resin, NMP as a solvent capable of dissolving the resin, and ethanol as a solvent incapable of dissolving the resin were mixed at a weight ratio of 15:50:35. The mixture was white turbid at room temperature, with the resin hardly dissolving. The adhesive liquid was heated to 70°C, whereupon polyvinylidene fluoride dissolved to increase the viscosity of the mixture, but insoluble matter still remained.

The adhesive liquid heated to 70°C was applied to the same separator as used in Example 1, and the same positive and negative electrodes as prepared in Example 1 were joined thereto. A battery was prepared in the same manner as in Example 1 using the resulting electrode body. The battery thus prepared had a weight energy density of 100 Wh/kg. The charge capacity even after 200 charge and discharge cycles at a current of C/2 was as high as 60% of the initial value.

### EXAMPLE 6

Polyvinylidene fluoride (Solef 21508, produced by Nippon Solvey K.K.) as a resin, NMP as a solvent capable of dissolving the resin, and water as a solvent incapable of dissolving the resin were mixed at a weight ratio of 15:70:15. The resin hardly dissolving, the mixture was white turbid at room temperature. The adhesive liquid was heated to 70°C, whereupon polyvinylidene fluoride dissolved to increase the viscosity of the mixture, but insoluble matter still remained.

The adhesive liquid heated to 70°C was applied to the same separator as used in Example 1, and the same positive and negative electrodes as prepared in Example 1 were joined thereto. A battery was prepared in the same manner as in Example 1 using the resulting electrode body. The battery thus prepared had a weight energy density of 120 Wh/kg. The charge capacity even after 200 charge and discharge cycles at a current of C/2 was as high as 63% of the initial value.

### EXAMPLE 7

While the foregoing Examples have explained production of a single type lithium ion battery having a single electrode body in which a positive electrode and a negative electrode are facing each other with a separator therebetween, a multilayer type lithium ion battery having a plurality of such electrode bodies can be produced similarly.

In the following is described a process for producing a multilayer type lithium ion battery having a tabular laminated structure as shown in Fig. 1, in which a plurality of cut sheets of a separator 3 have a positive electrode 1 and a negative electrode 2 alternately interposed among them.

### Preparation of positive electrode:

A positive electrode active material paste prepared from 87% by weight of LiCoO₂, 8% by weight of graphite powder (KS-6, produced by Lonza Ltd.), and 5% by weight of polyvinylidene fluoride (KF 1100, produced by Kureha Chemical Ind. Co., Ltd.)was applied with a doctor blade to a coating thickness of 300 µm to form a positive electrode active material film of band form. A 30 µm thick aluminum net of band form as a positive electrode current collector was placed thereon, and the positive electrode active material paste was again spread on the net with a doctor blade to a thickness of 300 µm. The double-coated aluminum net was allowed to stand in a drier kept at 60°C for 60 minutes to make the paste half-dried. The resulting laminate was rolled to a thickness of 400 µm to prepare a positive electrode 1 of band form having positive electrode active material layers on the current collector.

### Preparation of negative electrode:

A negative electrode active material paste prepared from 95% by weight of Mesophase Microbeads Carbon (a trade name, produced by Osaka Gas Co., Ltd.) and 5% by weight of polyvinylidene fluoride (KF1100, produced by Kureha Chemical Ind. Co., Ltd.) was applied with a doctor blade to a thickness of 300 µm to make a negative electrode active material film of band form. A 20 µm thick copper net of band form as a negative electrode current collector was placed thereon, and the negative electrode active material paste was again spread thereon with a doctor blade to a thickness of 300 µm. The laminate was allowed to stand in a drier kept at 60°C for 60 minutes to make the paste half-dried. The resulting laminate was rolled to a thickness of 400 µm to prepare a negative electrode 2 of band form having negative electrode active material layers on the current collector.

### Preparation of battery:

The same adhesive liquid 4 as used in Example 1 was heated to 80°C and applied to a side each of two unrolled continuous porous polypropylene sheets (Cell Guard #2400, produced by Hoechst Celanese) as separators 3. The negative electrode 2 (or positive electrode) of band form was interposed between the coated sides of the separators, and they were brought into contact to be joined together, followed by drying in vacuo.

The paired separators having the negative electrode 2 (or positive electrode) interposed therebetween were cut to size. The same adhesive liquid 4 as used in Example 1 was heated to 80°C and applied to a side of a cut piece of the paired separators, and a piece of the positive electrode 1 (or negative electrode) cut to size was adhered thereto. The adhesive liquid was similarly applied to a side of another piece of the paired separators cut to size, and the coated side was stuck to the positive electrode 1 (or negative electrode) having been adhered. These steps were repeated to form a battery body having a plurality of electrode bodies. The battery body was dried in vacuo while pressing to hold the shape. There was thus obtained a battery structure having a tabular laminated structure as shown in Fig. 1, in which a plurality of cut pieces of a separator 3 have a positive electrode 1 and a negative electrode 2 alternately interposed among them.

A current collecting tab was connected to the end of every positive electrode and every negative electrode, and the tabs were spot welded among positive electrodes and among negative electrodes to establish electrical parallel connection in the tabular laminated battery body.

The tabular laminated battery body was immersed in an electrolytic solution prepared by dissolving lithium hexafluorophosphate in a 1:1 (by mole) mixed solvent of ethylene carbonate and dimethyl carbonate in a concentration of 1.0 mol/dm³. The impregnated battery body was heat-sealed into an aluminum laminate film pack to complete a lithium ion secondary battery having a tabular laminated battery body.

### EXAMPLE 8

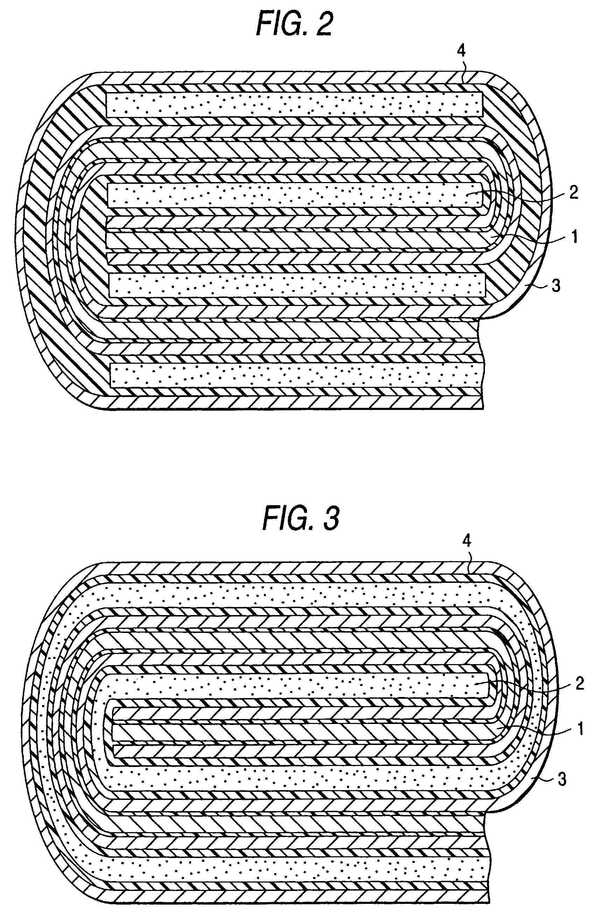

In the following is described a process for producing a multilayer type lithium ion battery having a tabular roll type laminated structure as shown in Fig. 2 by using the same electrodes as prepared in Example 7. In Fig. 2, positive electrodes 1 and negative electrodes 2 are alternately interposed in rolled separators 3.

### Preparation of battery:

The same adhesive liquid 4 as used in Example 1 was heated to 80°C and applied to a side each of two unrolled continuous porous polypropylene sheets (Cell Guard #2400, produced by Hoechst Celanese) as separators 3. A positive electrode 1 (or negative electrode) of band form was interposed between the coated sides of the separators, and they were brought into contact to be joined together, followed by drying in vacuo.

The same adhesive liquid 4 as used in Example 1 was heated to 80°C and applied to a side of the paired separators of band form having the positive electrode 1 (or negative electrode) therebetween. One end of the coated paired separators was folded back at a prescribed length while inserting a negative electrode 2 (or positive electrode) into the fold, and the laminate was passed through a laminator. Subsequently, the adhesive liquid 4 was similarly applied to the other separator of band form, and another piece of the negative electrode 2 (or positive electrode) was stuck thereto at the position corresponding to the negative electrode 2 (or positive electrode) having been inserted into the fold, followed by rolling up the separators to make an oblong shape. The separators were again rolled up with a still another cut piece of the negative electrode 2 (or positive electrode) inserted therein. These steps were repeated to form a battery body having a plurality of laminated electrode bodies. The battery body was dried while applying pressure to obtain a battery structure having a tabular roll type laminated structure as shown in Fig. 2, in which positive electrodes and negative electrodes are alternately interposed in rolled separators.

### EXAMPLE 9

A battery having a tabular roll type laminated structure as shown in Fig. 3 was prepared by using the same electrodes as in Example 7 and the adhesive liquid described in Example 1. Difference from Example 8 lies in that the positive electrode, the negative electrode, and the separator were rolled up simultaneously.

### Preparation of battery:

Two rolls of a porous polypropylene sheet (Cell Guard #2400, produced by Hoechst Celanese) were unrolled to feed two continuous separators 3. A positive electrode 1 (or negative electrode) of band form was set between the two separators 3, and a negative electrode 2 (or positive electrode) of band form was placed on the outer side of one of the separators 3 with a prescribed length of its starting end sticking out over the end of that separator 3.

The same adhesive liquid 4 as used in Example 1 was heated to 80°C and applied to the inner sides of the paired separators 3 and the outer side of the separator on which the negative electrode 2 (or positive electrode) had been arranged. The negative electrode 2 (or positive electrode), the two separators 3, and the positive electrode 1 (or negative electrode) were stuck together and passed through a laminator. The adhesive liquid 4 was similarly applied to the outer side of the other separator 3, and the sticking end of the negative electrode 2 (or positive electrode) was folded back and stuck to the coated surface. The laminate was rolled up in such a manner that the folded negative electrode 2 (or positive electrode) might be wrapped in, making an oblong shape, to form a battery body having a plurality of laminated electrode bodies. The battery body was dried in vacuo while applying pressure to prepare a battery structure having the tabular roll type laminated structure shown in Fig. 3.

### EXAMPLE 10

While Examples 8 and 9 have shown battery structures in which separators 3 of band form are rolled up, the battery structure having the tabular roll type laminated structure may be such that is prepared by folding a pair of separators 3 of band form having a positive electrode 1 (or negative electrode) of band form joined therebetween while sticking a cut piece of a negative electrode 2 (or positive electrode) into each fold thereby to alternately interpose the positive electrode 1 and the negative electrode 2 between folded separators 3.

While in each of Examples 7 through 10 the adhesive liquid described in Example 1 was used, the adhesive liquid is not limited thereto. For example, those described in Examples 2 to 6 are also useful.

### Industrial Applicability

The battery of the invention can be used as a secondary battery in portable electronic equipment, such as portable personal computers and cellular phones. The invention realizes size and weight reduction and freedom of shape design of batteries as well as improvement on battery performance.

## Claims

1. A process for producing a lithium ion battery having a separator and electrodes each adhered to the separator, the separator holding an electrolytic solution containing lithium ions, the process comprising the steps of:
coating the adhesive surface of the separator or of the electrode with a heated adhesive liquid which is a mixture of a solvent and a resin that is not completely dissolved in the solvent at or below room temperature;
superposing the separator and the electrodes with their adhesive surfaces facing each other; and
drying the applied adhesive liquid.

2. A process for producing a lithium ion battery according to claim 1, wherein the resin is a homo- or copolymer of vinylidene fluoride, vinyl alcohol, methacrylic acid or acrylic acid, agar or gelatin.

3. A process for producing a lithium ion battery according to claim 1, wherein the solvent is the one used as the electrolytic solution.

4. A process for producing a lithium ion battery according to claim 3, wherein the resin is a homo- or copolymer of vinylidene fluoride.

5. A process for producing a lithium ion battery according to claim 1, wherein the solvent is a mixture of a solvent that dissolves the resin and a solvent that does not dissolve the resin.

6. A process for producing a lithium ion battery according to claim 5, wherein the resin is a homo- or copolymer of vinylidene fluoride, vinyl alcohol, methacrylic acid or acrylic acid, agar or gelatin.

7. A process for producing a lithium ion battery according to claim 5, wherein the solvent that does not dissolve the resin is an alcohol or water.

8. A process for producing a lithium ion battery according to claim 7, wherein the resin is a homo- or copolymer of vinylidene fluoride.
